# EUROPÄISCHE PATENTSCHRIFT

(11) **EP 3 277 605 B1**
(45) Veröffentlichungstag und Bekanntmachung des Hinweises auf die Patenterteilung: **06.05.2020**
(21) Anmeldenummer: 16708161.1
(22) Anmeldetag: 07.03.2016
(51) Int. Cl.: B65G 17/12, B65G 17/18, B65G 17/42, A22C 25/08

(54) **MULDENFÖRDERER ZUM TRANSPORTIEREN VON FISCHEN QUER ZU IHRER LÄNGSERSTRECKUNG IN TRANSPORTRICHTUNG SOWIE ANORDNUNG UND VERFAHREN**
TROUGH-TYPE CONVEYOR FOR TRANSPORTING FISH TRANSVERSELY TO THE LONGITUDINAL EXTENT THEREOF IN THE TRANSPORT DIRECTION, ARRANGEMENT AND METHOD
CONVOYEUR À BANDE À AUGES POUR TRANSPORTER DES POISSONS DE MANIÈRE TRANSVERSALE PAR RAPPORT À LEUR EXTENSION LONGITUDINALE DANS UNE DIRECTION DE TRANSPORT, ENSEMBLE ET PROCÉDÉ

(30) Priorität: 02.04.2015 DE 102015105164
(43) Veröffentlichungstag der Anmeldung: 07.02.2018
(73) Patentinhaber: Nordischer Maschinenbau Rud. Baader GmbH + Co. KG, 23560 Lübeck (DE)
(72) Erfinder: KOWALSKI, Wolfhard, 18442 Pütte (DE)
(74) Vertreter: Stork Bamberger Patentanwälte PartmbB
(86) Internationale Anmeldenummer: PCT/EP2016/054742
(87) Internationale Veröffentlichungsnummer: WO 2016/155977

(56) Entgegenhaltungen:
- DE-A1- 1 756 838
- DE-B- 1 011 810
- DE-C- 878 925
- DE-U1- 9 212 788
- FR-A- 1 010 737
- FR-A- 1 584 294
- JP-A- S58 216 808

## Beschreibung

Die Erfindung betrifft einen Muldenförderer, ausgebildet und eingerichtet zum Transportieren von Fischen quer zu ihrer Längserstreckung in Transportrichtung T_{M}, umfassend eine umlaufend antreibbare und aus Kettengliedern gebildete Transportkette mit einem die Transportebene E₁ definierenden Transporttrum und einem Rückführtrum, wobei die endlose Transportkette um mindestens zwei um eine Drehachse D_{U} drehbare Umlenkelemente zum Antreiben und Führen der Transportkette geführt ist und an der Transportkette Mulden zur Aufnahme jeweils eines Fisches angeordnet sind.

Die Erfindung betrifft weiterhin eine Anordnung, umfassend ein erstes Transportmittel zum Zuführen von Fischen in einen Übergabebereich zur Übergabe der Fische an ein zweites Transportmittel, das zweite Transportmittel zum Abführen der vom ersten Transportmittel übernommenen Fische, wobei das erste Transportmittel ein Muldenförderer ist, der zum Transportieren der Fische quer zu ihrer Längserstreckung in Transportrichtung T_{M} ausgebildet und eingerichtet ist.

Des Weiteren betrifft die Erfindung ein Verfahren zum Übergeben von Fischen von einem ersten Transportmittel an ein zweites Transportmittel, umfassend die Schritte: Zuführen der Fische quer zu ihrer Längserstreckung mittels eines Muldenförderers in Transportrichtung T_{M} in einen Übergabebereich Ü zur Übergabe der Fische an das zweite Transportmittel, Abgeben der Fische aus den Mulden im Übergabebereich Ü, indem die einer Transportkette zugeordneten Mulden mit der Transportkette um ein Umlenkelement geführt werden, so dass die Fische beim Übergang von einem Transporttrum zum Rückführtrum der Transportkette auf das zweite Transportmittel fallen, und Abtransportieren der Fische mittels des zweiten Transportmittels.

Solche Muldenförderer, Anordnungen und Verfahren kommen in der Fisch verarbeitenden Industrie zum Einsatz, um die in den Mulden auf der Seite liegenden Fische Rücken voraus oder Bauch voraus positionsgenau an einen Übergabebereich zu transportieren und dort, nämlich im Übergangsbereich vom Transporttrum zum Rückführtrum, gezielt und gerichtet abzugeben, wenn die Mulden der Transportkette beim Umlenken um das Umlenkelement folgen. Der Muldenförderer kann als "stand-alone"-Vorrichtung zu reinen Transportzwecken dienen oder ist Bestandteil einer Fischverarbeitungsmaschine zum Transportieren entlang von Bearbeitungsstationen, derart, dass die Fische in den Mulden liegend einer Bearbeitung unterzogen werden, beispielsweise dem Köpfen. Insbesondere für den Fall, dass der Muldenförderer Bestandteil einer Fischverarbeitungsmaschine ist, ist dem Muldenförderer ein weiteres Transportmittel zur Bildung einer Anordnung nachgeordnet, derart, dass die Fische vom Muldenförderer an das nachgeordnete Transportmittel zu übergeben sind.

Diese zielgerichtete und positionsgenaue Übergabe ist insbesondere dann von Bedeutung, wenn die Fische nach der Abgabe bzw. Übergabe vom Muldenförderer auf ein nachgeordnetes Transportmittel auf diesem weiter transportiert und ggf. weiteren Bearbeitungsschritten unterzogen werden sollen. Ein Beispiel einer solchen Anordnung sieht den Muldenförderer in einem ersten Bearbeitungsteil einer Fischverarbeitungsmaschine und das nachgeordnete Transportmittel in einem zweiten Bearbeitungsteil der Fischverarbeitungsmaschine vor. In dem Muldenförderer werden die Fische quer zu ihrer Längserstreckung transportiert und in dem Übergangsbereich vom Transporttrum zum Rückführtrum an das nachgeordnete Transportmittel übergeben, mittels dem die Fische ebenfalls queraxial zur ihrer Längserstreckung oder vorzugsweise in ihrer Längserstreckung transportiert werden.

Aus der G 92 12 788 U1 sind ein Muldenförderer sowie eine Anordnung bekannt. Dieser Muldenförderer weist eine Transportkette mit starren, nämlich unbeweglichen Mulden auf. Mit anderen Worten sind die einzelnen Mulden fest mit Kettengliedern der Transportkette verbunden. Dadurch folgen die Mulden unmittelbar und direkt dem Verlauf der Transportkette bzw. den Kettengliedern, an denen sie befestigt sind. Anders ausgedrückt beschreiben die Mulden exakt die gleiche Bewegungsbahn wie die Kettenglieder der Transportkette. Infolge der Umlenkung der Transportkette im Bereich eines Umlenkelementes am Ende des Transporttrums im Übergangsbereich zum Rückführtrum geraten die Fische unmittelbar zu Beginn der Umlenkung im Übergangsbereich ins Rutschen und fallen in freiem Fall und unkontrolliert nach unten. Üblicherweise fallen die Fische auf ein weiteres Transportmittel. Die Fische können jedoch auch in einen Behälter oder dergleichen fallen. In dem üblichen Fall, dass die Fische auf ein zweites Transportmittel fallen, ist eine kontrollierte Übergabe vom ersten Transportmittel auf das zweite Transportmittel erforderlich. Anders ausgedrückt ist eine ausreichende Führung der Fische während des freien Falls erforderlich. In der genannten G 92 12 788 U1 ist dazu im Übergangsbereich vom Transporttrum zum Rückführtrum sowie im Übergabebereich zum zweiten Transportmittel eine Abdeckung vorgesehen, die den Fisch während der Umlenkung zumindest zu Beginn der Abgabe führt und diesen somit zeitlich betrachtet später freigibt, um den freien Fall zu verkürzen. Es hat sich jedoch gezeigt, dass die Führung der Fische im Übergabebereich nicht ausreicht und insbesondere die Abgabe/Übergabe von kleinen Fischen problematisch ist, da die Abdeckung nur auf eine Fischgröße eingestellt ist. Nachteilig ergibt sich eine ungenügende Positionierung der Fische auf dem dem Muldenförderer nachgeordneten Transportmittel. Des Weiteren wird durch eine ungenaue Übergabe der Fische der exakte Zeittakt der Zuführung der Fische in den Übergangsbereich verzerrt, was insbesondere bei taktgebundenen Werkzeugen entlang des nachfolgenden Transportmittels zu unpräzisen Arbeitsergebnissen führt. DE 1 756 838 offenbart einen Muldenförderer mit den Merkmalen des Oberbegriffes des Anspruches 1.

Der Erfindung liegt somit die Aufgabe zugrunde, einen einfachen Muldenförderer zu schaffen, mittels dem eine präzise Abgabe der transportierten Fische im Übergangsbereich vom Transporttrum zum Rückführtrum geschaffen werden kann. Die Aufgabe besteht weiterhin darin, eine entsprechende Anordnung sowie ein entsprechendes Verfahren vorzuschlagen, die eine zuverlässige Übergabe der Fische vom Muldenförderer an ein zweites Transportmittel sowie eine präzise und fischgrößenunabhängige Positionierung der Fische auf dem zweiten Transportmittel ermöglichen.

Diese Aufgabe wird durch eine Vorrichtung nach Anspruch 1 gelöst, wobei jede Mulde um eine quer zur Transportrichtung T_{M} verlaufende Drehachse D_{M} schwenkbar an der Transportkette angeordnet ist und mindestens einen Führungskörper umfasst, und dass mindestens im Übergangsbereich vom Transporttrum zum Rückführtrum mindestens eine Führungsschiene zur Aufnahme der Führungskörper und Führen derselben angeordnet ist, wobei der Verlauf der oder jeder Führungsschiene im Übergangsbereich um das Umlenkelement herum mindestens teilweise vom Verlauf der Transportkette um das Umlenkelement herum abweicht. Mit dieser erfindungsgemäßen Ausbildung ist die Bewegungsbahn der Mulde mittels des Führungskörpers auf oder in der Führungsschiene mindestens streckenweise von der Bewegungsbahn der Transportkette entkoppelt, so dass die Mulden im Bereich der Umlenkung zumindest bezüglich ihrer Position zur Transportkette einen abweichenden Verlauf aufweisen. Während sich die Transportkette bereits in der Umlenkphase um das Umlenkelement herum befindet, ist die Mulde bedingt durch die Zwangsführung des Führungskörpers in der oder auf der Führungsschiene noch in einer Position, in der ein Rutschen der Fische aus der Mulde verhindert wird. Die erfindungsgemäße Ausführung ermöglicht jedem Fisch eine definierte Position bezüglich des Verlaufs bzw. seiner Bewegungsbahn im Bereich des Umlenkelementes, an dem der Fisch den Muldenförderer verlässt. Durch die von der Transportkette unabhängige Führung der Mulden im Bereich der Umlenkung erfolgt ein kontrolliertes Kippen der Mulden, wodurch eine Verzögerung des Kippmomentes, in dem die Fische aus der Mulde rutschen, erreicht wird. Dadurch wird zum einen der freie Fall der Fische signifikant verkürzt. Zum anderen erfolgt ein zielgerichteter und präziser Abwurf der Fische.

Die Erfindung zeichnet sich dadurch aus, dass die Transportkette im Bereich des im Übergangsbereich Ü vom Transporttrum zum Rückführtrum angeordneten Umlenkelementes auf einer Bewegungsbahn B_{T} mit einem konstanten Radius r_{T} bezogen auf die Drehachse D_{U} geführt ist, während die oder jede Führungsschiene eine Bewegungsbahn B_{F} für die Führungskörper mit einem variablen Radius r_{F} bezogen auf die Drehachse D_{U} beschreibt. Das bedeutet, dass die Transportkette mit einem gleichbleibenden Radius um das Umlenkelement herum geführt ist, der Führungskörper der Mulde und damit auch die Mulde jedoch ausgehend von einer zunächst parallel zur Transportkette verlaufenden Ausrichtung im Bereich des Umlenkelementes mit einem veränderlichen Abstand zur Drehachse D_{U} verläuft. Dadurch verändert sich der von der Mulde zurückzulegende Weg im Vergleich zum Weg der Transportkette, wodurch sich das Drehen/Kippen der Mulde gegenüber der Transportkette zeitlich gesehen versetzen lässt.

Erfindungsgemäß schneidet die Bewegungsbahn der Führungskörper die Bewegungsbahn der Transportkette mindestens zwei Mal. Dadurch können der Führungskörper und damit die Mulde ausgehend von einer zunächst parallelen Ausrichtung zur Transportkette in eine andere (nicht parallele) Bewegungsbahn und dann wieder zurück in die parallele Ausrichtung bewegt werden. Bevorzugt wird der Abstand A₁ der Führungsschiene bzw. der Bewegungsbahn B_{F} des Führungskörpers zur Bewegungsbahn B_{T} der Transportkette zu Beginn der Umlenkung bzw. kurz vor Beginn der Umlenkung (kurz vor der 12.00 Uhr Position) geringer, so dass die Bewegungsbahn B_{F} des Führungskörpers die Bewegungsbahn B_{T} der Transportkette kurz nach Beginn der Umlenkung (kurz nach der 12.00 Uhr Position) von außen nach innen schneidet. Nach einer etwa 90° Drehung um die Drehachse D_{U} (kurz vor der 3.00 Uhr Position) wird der Abstand der Führungsschiene bzw. der Bewegungsbahn B_{F} des Führungskörpers zur Bewegungsbahn B_{T} der Transportkette wieder größer, so dass die Bewegungsbahn B_{T} des Führungskörpers die Bewegungsbahn B_{F} der Transportkette von innen nach außen schneidet. Etwa in der 4.00 Uhr Position entspricht der Abstand A₂ wieder dem Abstand A₁. Durch diese Ausbildung kann ein optimaler und präziser Kippmoment für die Fische erzeugt werden, der den freien Fall verkürzt und eine exakte Positionierung gewährleistet.

Eine zweckmäßige Weiterbildung der Erfindung ist dadurch gekennzeichnet, dass jeder Führungskörper ein zylindrisches Gleitstück umfasst, dessen Mittelachse M parallel zur Drehachse D_{M} der Mulde ausgerichtet ist. Dadurch ist auf besonders einfache Weise eine präzise Führung geschaffen.

Eine bevorzugte Ausführungsform zeichnet sich dadurch aus, dass eine Führungsnut jeder Führungsschiene etwa U-förmig ausgebildet ist, wobei jede Führungsnut radial gerichtet bezogen auf die Drehachse D_{U} nach unten und nach oben begrenzt ist. Das bedeutet, dass der Führungskörper sicher und präzise zwangsgeführt der Führungsnut folgt, so dass die Kippposition der Mulde reproduzierbar angesteuert wird.

Zweckmäßigerweise ist jeder Führungskörper in Transportrichtung T_{M} nachlaufend gegenüber der Drehachse D_{M} der zugehörigen Mulde angeordnet. Dadurch wird der zuvor beschriebene Effekt der Optimierung der Bewegungsbahn der Mulde abweichend von der Bewegungsbahn der Transportkette unterstützt.

Besonders vorteilhaft ist eine erfindungsgemäße Vorrichtung, die sich dadurch auszeichnet, dass die Mulden auf der in Transportrichtung T_{M} vorauslaufenden Seite derart offen ausgebildet sind, dass die in den Mulden liegenden Fische im Übergangsbereich vom Transporttrum in den Rückführtrum aus den Mulden fallen. Diese Ausbildung ermöglicht das positionsgenaue und optimal getimte Abgeben der Fische.

Vorteilhafterweise weisen die Mulden einen im Querschnitt etwa L-förmigen Muldenkörper auf, der eine mindestens im Bereich des Transporttrums im Wesentlichen parallel zur Transportebene E₁ ausgerichtete Auflagefläche und eine senkrecht zur Auflagefläche ausgerichtete Anlagefläche aufweist, wobei die Anlagefläche der Mulden an der in Transportrichtung T_{M} nachlaufenden Seite der Auflagefläche angeordnet ist. Diese Ausbildung unterstützt den zuvor genannten Effekt.

Eine solche gezielte und durch den erfindungsgemäßen Muldenförderer gewährleistete Übergabe der Fische ist insbesondere dann von Bedeutung, wenn die Fische von dem erfindungsgemäßen Muldenförderer an ein in Transportrichtung T_{M} nachgeordnetes Transportmittel übergeben werden sollen. Von daher wird die genannte Aufgabe auch durch eine Anordnung mit den eingangs genannten Merkmalen dadurch gelöst, dass der Muldenförderer nach einem oder mehreren der Ansprüche 1 bis 8 ausgebildet und eingerichtet ist.

Vorzugsweise ist das zweite Transportmittel ein Transportförderer, der zum längsaxialen Transportieren der Fische ausgebildet und eingerichtet ist, wobei die Transportebene E₂ des Transportförderers unterhalb der Transportebene E₁ des Muldenförderers liegt und die Transportrichtung T_{T} des Transportförderers quer zur Transportrichtung T_{M} des Muldenförderers ausgerichtet ist.

Die sich aus der erfindungsgemäßen Anordnung ergebenden Vorteile wurden bereits im Zusammenhang mit dem erfindungsgemäßen Muldenförderer ausführlich beschrieben, weshalb zur Vermeidung von Wiederholungen auf die entsprechenden Passagen verwiesen wird.

Die Aufgabe wird auch durch ein Verfahren nach Anspruch 9 gelöst, wobei die Mulden des Muldenförderers mindestens im Übergabebereich Ü entlang eines vom Verlauf der Transportkette abweichenden Verlaufs geführt werden.

Vorzugsweise bleiben die Mulden im Übergabebereich Ü zunächst in einer Position, die im Wesentlichen der Position entspricht, die die Mulden während des Transports auf dem Transporttrum aufweisen, während die Transportkette bereits der Umlenkung um das Umlenkelement folgt.

Eine vorteilhafte Weiterbildung sieht vor, dass sich die Mulden im Übergabebereich Ü auf einer anderen Bewegungsbahn bewegen als die Transportkette, indem die Mulden ihren in Führungsschienen geführten Führungskörpern auf einer Bewegungsbahn B_{F} mit einem variablen Radius r_{F} folgen, während die Transportkette einer Bewegungsbahn B_{T} mit einem konstanten Radius r_{T} folgt.

Die sich daraus ergebenden Vorteile wurden im Zusammenhang mit dem erfindungsgemäßen Muldenförderer nach einem oder mehreren der Ansprüche 1 bis 6, der sich insbesondere zur Ausführung des Verfahrens eignet, beschrieben, weshalb zur Vermeidung von Wiederholungen auf die entsprechenden Passagen verwiesen wird.

Weitere zweckmäßige und/oder vorteilhafte Merkmale und Weiterbildungen ergeben sich aus den Unteransprüchen und der Beschreibung. Eine besonders bevorzugte Ausführungsform der Erfindung wird anhand der beigefügten Zeichnung näher erläutert. In der Zeichnung zeigt:
- Fig. 1: eine schematische Darstellung des Übergangsbereichs eines Muldenförderers vom Transporttrum zum Rückführtrum in Seitenansicht,

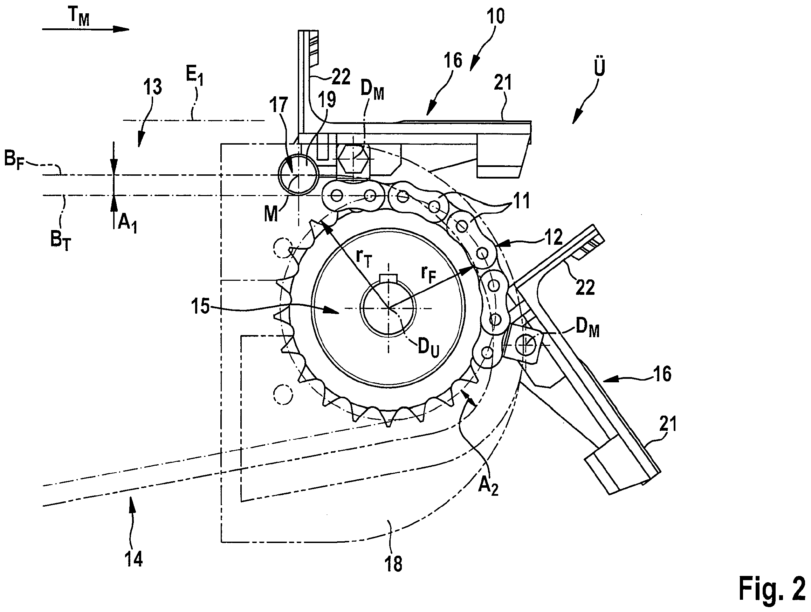

- Fig. 2: die Darstellung gemäß Figur 1, allerdings in einer gegenüber der Figur 1 weiter fortgeschrittenen Kippposition der Mulden,

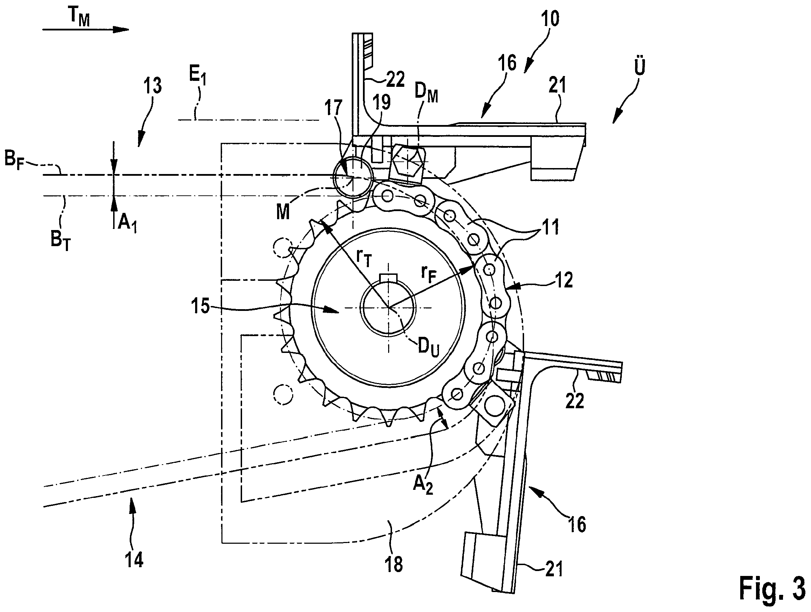

- Fig. 3: die Darstellung gemäß Figur 1, allerdings in einer gegenüber der Figur 2 weiter fortgeschrittenen Kippposition der Mulden,

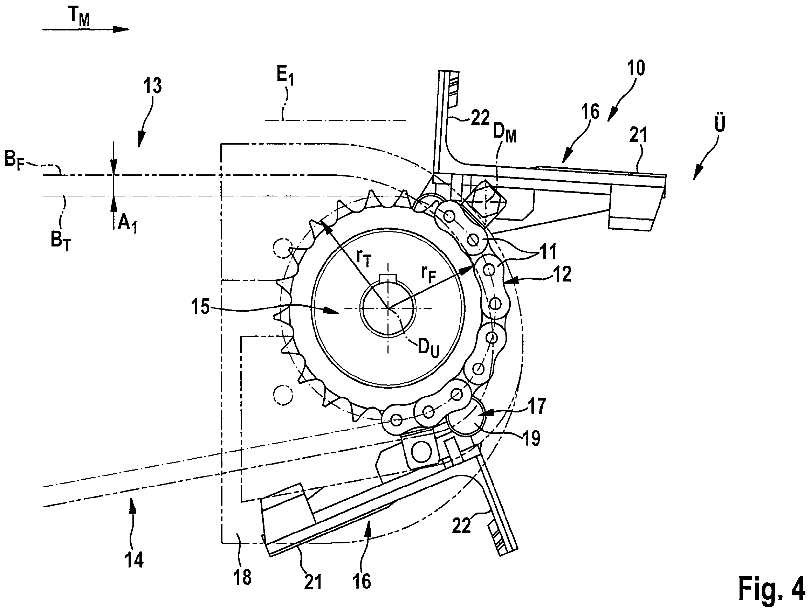

- Fig. 4: die Darstellung gemäß Figur 1, allerdings in einer gegenüber der Figur 3 weiter fortgeschrittenen Kippposition der Mulden,

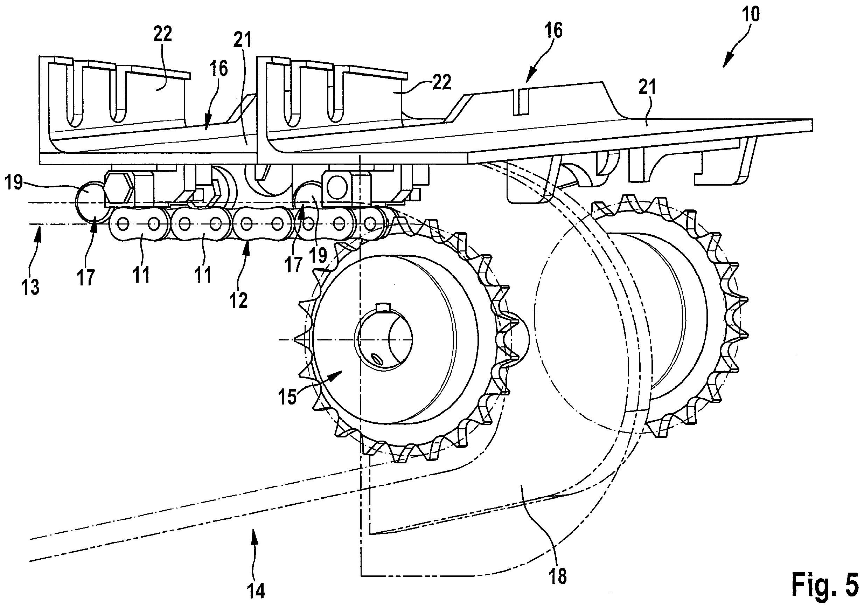

- Fig. 5: eine perspektivische Darstellung des Übergangsbereichs von schräg vorne und unten,

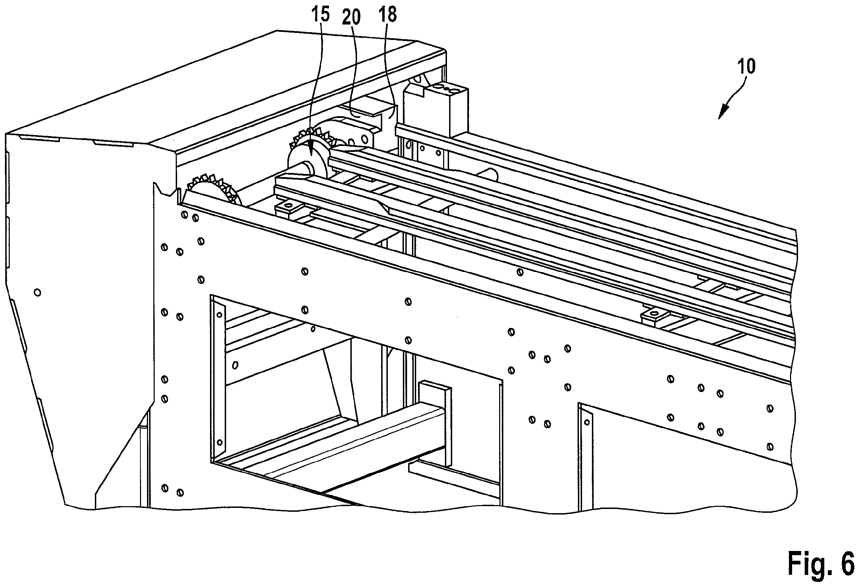

- Fig. 6: eine perspektivische Darstellung des Übergangsbereichs von schräg hinten und oben, wobei die Transportkette zu Zwecken der besseren Übersicht nicht dargestellt ist, und

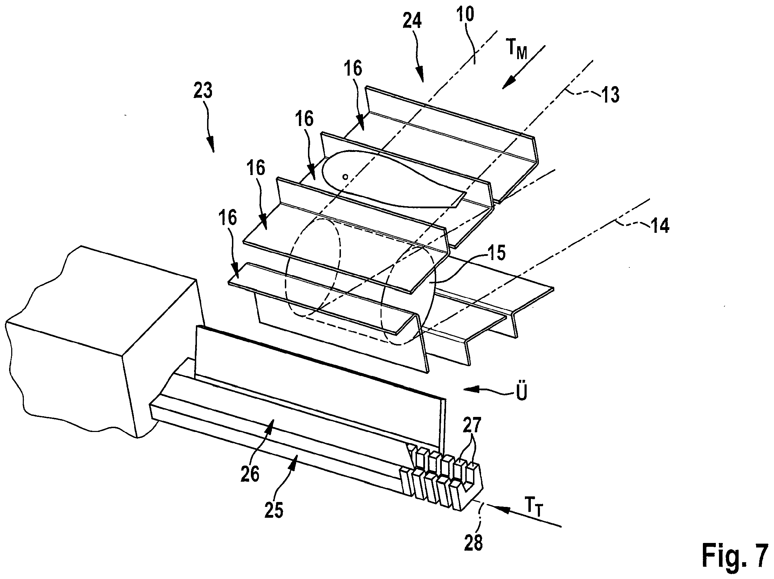

- Fig. 7: eine schematische Darstellung einer Anordnung mit einem Muldenförderer und einem im rechten Winkel zum Muldenförderer angeordneten Transportförderer.

Der in der Zeichnung dargestellte Muldenförderer dient zum Transportieren von Fischen quer zu ihrer Längserstreckung auf der Seite liegend und Bauch voraus zu einem Übergabebereich, an dem die Fische an ein dem Muldenförderer nachgeordnetes Transportmittel übergeben und von diesem dann Bauch nach unten in ihrer Längserstreckung weiter transportiert werden. Der erfindungsgemäße Muldenförderer sowie die aus Muldenförderer und Transportmittel gebildete Anordnung dienen jedoch in gleicher Weise zum Transport von Fischen Rücken voraus sowie zum Weitertransport der Fische auf dem dem Muldenförderer nachgeordneten Transportmittel quer zu ihrer Längserstreckung.

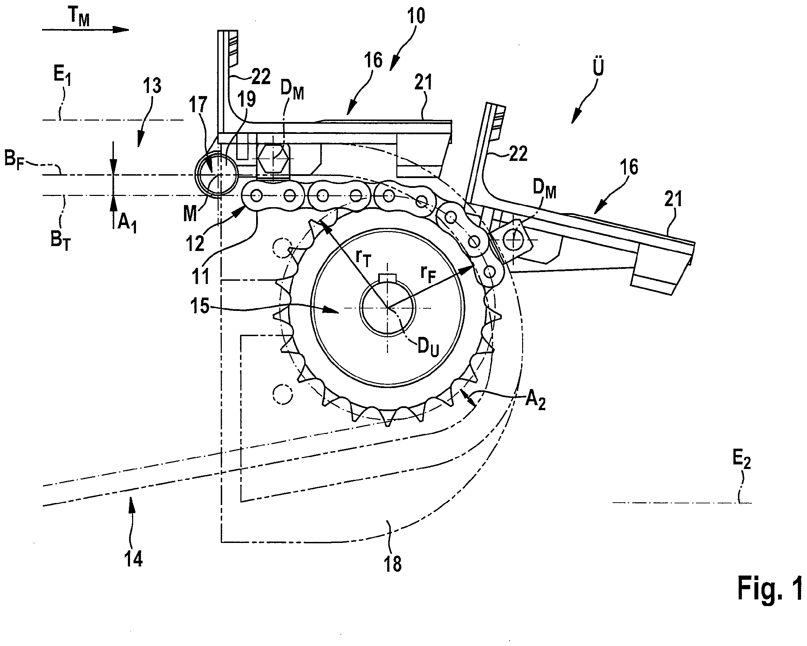

In der Figur 1 ist Muldenförderer 10 bzw. ein den Übergangsbereich/Übergabebereich Ü bildender Ausschnitt desselben dargestellt. Der Muldenförderer 10 ist zum Transportieren von Fischen quer zu ihrer Längserstreckung in Transportrichtung T_{M} ausgebildet und eingerichtet und umfasst eine umlaufend antreibbare und aus Kettengliedern 11 gebildete Transportkette 12 mit einem die Transportebene E₁ definierenden Transporttrum 13 und einem Rückführtrum 14, wobei die endlose Transportkette 12 um mindestens zwei um eine Drehachse D_{U} drehbare Umlenkelemente 15 zum Antreiben und Führen der Transportkette 12 geführt ist. An der Transportkette 12 sind Mulden 16 zur Aufnahme jeweils eines Fisches angeordnet. Im Übergangsbereich Ü vom Transporttrum 13 zum Rückführtrum 14, also in dem Bereich, in dem die Transportkette 12 um das Umlenkelement 15 geführt ist, kippen die Mulden 16 zur Abgabe der auf den Mulden 16 befindlichen Fische, so dass am Ende des Transporttrums 13 der Übergabebereich Ü für die Fische gebildet ist. Nach dem Kippen der Mulden und der Abgabe der Fische aus der Mulde 16 wird der Transporttrum 13 dann wieder zum Rückführtrum 14.

Diese Vorrichtung 10 zeichnet sich erfindungsgemäß dadurch aus, dass jede Mulde 16 um eine quer zur Transportrichtung T_{M} verlaufende Drehachse D_{M} schwenkbar an der Transportkette 12 angeordnet ist und mindestens einen Führungskörper 17 umfasst, und dass mindestens im Übergangsbereich Ü vom Transporttrum 13 zum Rückführtrum 14 mindestens eine Führungsschiene 18 zur Aufnahme der Führungskörper 17 und Führen derselben angeordnet ist, wobei der Verlauf der oder jeder Führungsschiene 18 im Übergangsbereich Ü um das Umlenkelement 15 herum mindestens teilweise vom Verlauf der Transportkette 12 um das Umlenkelement 15 herum abweicht. Durch die Schwenkbarkeit der Mulden 16 sind diese gegenüber den Kettengliedern 11 beweglich, derart, dass die Kippbewegung der Mulden 16 im Bereich des Umlenkelementes 15 im Rahmen der Freiheitsgrade unabhängig von der Bewegung der Transportkette 12 ausgeübt werden kann. Mittels der Führungskörper 17, die vorzugsweise fest an der Mulde 16 angeordnet sind, wird die Mulde 16 durch die Führungsschiene 18 auf eine von der Transportkette 12 abweichende Bewegungsbahn gezwungen, so dass die Kippbewegung der Mulden 16 herausgezögert werden kann. Der Übergangsbereich Ü ist der Bereich, in dem die Fische aus den Mulden 16 fallen, so dass der Übergangsbereich Ü gleichzeitig den Übergabebereich Ü der Fische an eine nachgeordnete Station, insbesondere ein weiteres Transportmittel, bildet (hierzu weiter unten).

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung zusammengefasst oder in einer gemeinsamen Ausführungsform beschrieben sind, auch funktional eigenständig die weiter oben beschriebene Vorrichtung 10 weiterbilden können.

Optional kann jede Mulde 16 über die gesamte Länge der Transportkette 12 mittels des Führungskörpers 17 in entsprechenden Führungsschienen 18 geführt sein, also insbesondere auch entlang des gesamten Transporttrums 13 und/oder des gesamten Rückführtrums 14. Bevorzugt ist die Führung der Mulden 16 mittels des Führungskörpers 17 innerhalb der Führungsschiene 18 jedoch auf den Bereich desjenigen Umlenkelementes 15 beschränkt, an dem der Übergangsbereich Ü ausgebildet ist. Mit anderen Worten ist im Übergangsbereich Ü dem Umlenkelement 15 mindestens einseitig ein Abschnitt einer Führungsschiene 18 zugeordnet, in den der Führungskörper 17 während der Umlenkung der Transportkette 12 um das Umlenkelement 15 einfädelt und geführt wird. Wie erwähnt ist der Führungskörper 17 zu einer Seite der Transportkette 12 hin ausgerichtet, um in die einseitig angeordnete Führungsschiene 18 einzugreifen. In anderen Ausführungsformen kann der Führungskörper 17 auch zu beiden Seiten der Transportkette 12 hin ausgerichtet sein. In diesem Fall sind zu beiden Seiten des Umlenkelementes 15 Abschnitte einer Führungsschiene 18 angeordnet, so dass die Mulde 16 zu beiden Seiten geführt ist. Die Anzahl der Führungskörper 17 an einer Mulde 16, deren Anordnung und Zusammenwirken mit geeigneten Führungsbahnen, Schienen oder dergleichen kann selbstverständlich variieren.

Die Transportkette 12 ist im Bereich des im Übergangsbereich Ü vom Transporttrum 13 zum Rückführtrum 14 angeordneten Umlenkelementes 15 auf einer Bewegungsbahn B_{T} mit einem konstanten Radius r_{T} bezogen auf die Drehachse D_{U} geführt, während die oder jede Führungsschiene 18 eine Bewegungsbahn B_{F} für die Führungskörper 17 mit einem variablen Radius r_{F} bezogen auf die Drehachse D_{U} beschreibt. Erfindungsgemäß schneidet die Bewegungsbahn B_{F} des Führungskörpers 17 die Bewegungsbahn B_{T} der Transportkette 12 zwei Mal. In der dargestellten Ausführungsform verläuft der Führungskörper 17 auf seiner Bewegungsbahn B_{F} bis kurz vor den Übergangsbereich Ü in Transportrichtung T_{M} parallel zur Bewegungsbahn B_{T} der Transportkette 12. Dadurch liegen die Fische auf der Mulde 16 in der Transportebene E₁. Zu Beginn der Umlenkung der Transportkette 12 ändert sich der ursprüngliche Abstand A₁ der beiden Bewegungsbahnen B_{T} und B_{F}, indem der Abstand der Bewegungsbahn B_{F} des Führungskörpers 17 zur Drehachse D_{U} geringer wird und die Bewegungsbahn B_{T} der Transportkette 12 von außen nach innen schneidet. Zum Ende der Umlenkung der Transportkette 12 ändert sich der Abstand der beiden Bewegungsbahnen B_{T} und B_{F} wieder, indem der Abstand der Bewegungsbahn B_{F} des Führungskörpers 17 zur Drehachse D_{U} größer wird und die Bewegungsbahn B_{T} der Transportkette 12 von innen nach außen schneidet, bis die Bewegungsbahn B_{F} des Führungskörpers 17 wieder einen Abstand A₂ zur Bewegungsbahn B_{T} der Transportkette 12 aufweist, der dem ursprünglichen Abstand A₁ entspricht. Selbstverständlich kann die Anzahl der Schnittpunkte der Bewegungsbahnen B_{T} und B_{F} variieren, ebenso wie der Verlauf der Bewegungsbahn B_{F} des Führungskörpers 17 in Bezug auf die Bewegungsbahn B_{T} der Transportkette 12.

Jeder Führungskörper 17 umfasst in der dargestellten Ausführungsform ein zylindrisches Gleitstück 19, dessen Mittelachse M parallel zur Drehachse D_{M} der Mulde 16 ausgerichtet ist. Eine Führungsnut 20 jeder Führungsschiene 18 ist etwa U-förmig zur Aufnahme des Gleitstücks 19 ausgebildet und eingerichtet, wobei jede Führungsnut 20 radial gerichtet bezogen auf die Drehachse D_{U} nach unten und nach oben begrenzt ist. Anders ausgedrückt ist im Bereich des Umlenkelementes 15 eine Begrenzung für die Gleitstücke 19 vorgesehen, die ein radial gerichtetes Ausweichen der Gleitstücke 19 verhindert. Die Ausbildung und insbesondere die Form des Führungskörpers 17 können selbstverständlich variieren. Entsprechend können auch die Führungsschienen 18 entsprechend angepasst ausgebildet sein oder durch konstruktiv andere Führungssysteme ersetzt werden. So sind beispielsweise andere Gleit- oder Führungskörper einsetzbar, die auf oder in Führungen z.B. mit geschlitzten Gleitflächen laufen.

Grundsätzlich ist die Position des oder jedes Führungskörpers 17 an der Mulde 16 frei wählbar. Besonders bevorzugt ist jeder Führungskörper 17 in Transportrichtung T_{M} nachlaufend gegenüber der Drehachse D_{M} der zugehörigen Mulde 16 angeordnet. Jede Mulde 16 ist auf der in Transportrichtung T_{M} vorauslaufenden Seite derart offen ausgebildet, dass die in den oder auf den Mulden 16 liegenden Fische im Übergangsbereich Ü vom Transportrum 13 in den Rückführtrum 14 aus den oder von den Mulden 16 fallen. Bevorzugt weisen die Mulden 16 einen im Querschnitt etwa L-förmigen Muldenkörper auf, der eine mindestens im Bereich des Transporttrums 13 im Wesentlichen parallel zur Transportebene E₁ ausgerichtete Auflagefläche 21 und eine senkrecht zur Auflagefläche 21 ausgerichtete Anlagefläche 22 aufweist, wobei die Anlagefläche 22 der Mulden 16 an der in Transportrichtung T_{M} nachlaufenden Seite der Auflagefläche 21 angeordnet ist. In weiteren nicht dargestellten Ausführungsformen kann die Ausbildung und Gestalt der Mulden 16 auch variieren. Beispielsweise können die Mulden 16 auch wannenartig ausgebildet sein, wobei die in Transportrichtung T_{M} vorauslaufende Seitenwand der Mulde 16 dann vorzugsweise schwenkbar gelagert ist, derart, dass die Fische beim Kippen aus der oder von der Mulde 16 diese Seitenwand aufdrücken. In der dargestellten Ausführungsform ist die Auflagefläche 21 im Bereich des Transporttrums 13 im Wesentlichen horizontal ausgerichtet und definiert die Transportebene E₁. Im Wesentlichen bedeutet in diesem Zusammenhang, dass auch eine leichte Neigung der Auflagefläche 21 im Bereich des Transporttrums 13 möglich ist.

In weiteren nicht explizit dargestellten Ausführungsformen können die Umlenkelemente 15 anstelle eines Kettenrades (gemäß Zeichnung) auch als Nutenscheibe, Reibrad oder dergleichen ausgebildet sein. Die Anzahl der Umlenkelemente 15 kann ebenfalls variieren und mehr als zwei betragen. Mindestens eines der Umlenkelemente 15 ist durch einen nicht dargestellten Antrieb rotierend antreibbar. Die Transportkette 12 kann ein sich über die gesamte Breite des Muldenförderers 10 erstreckendes Kettenband sein. Alternativ können auch zwei beabstandet zueinander angeordnete Einzelketten vorgesehen sein. Die Transportkette 12 kann des Weiteren auch durch ein Förderband oder dergleichen ersetzt werden, an dem dann die Mulden 16 gelenkig befestigt sind.

Der Muldenförderer 10 kann als so genannte stand-alone-Lösung in einer Fischverarbeitungsmaschine eingesetzt werden. Bevorzugt ist der Muldenförderer 10 jedoch Bestandteil einer Anordnung 23, die ein erstes Transportmittel 24 zum Zuführen von Fischen in einen Übergabebereich Ü zur Übergabe der Fische an ein zweites Transportmittel sowie das zweite Transportmittel 25 zum Abführen der vom ersten Transportmittel 24 übernommenen Fische umfasst. Das erste Transportmittel 24 ist ein Muldenförderer 10, der zum Transportieren der Fische quer zu ihrer Längserstreckung in Transportrichtung T_{M} ausgebildet und eingerichtet ist. Im Endbereich des Muldenförderers 10 befindet sich der Übergabebereich. Erfindungsgemäß ist der Muldenförderer 10 nach einem oder mehreren der Ansprüche 1 bis 8 ausgebildet und eingerichtet. Entsprechend wird mit Bezug auf die erfindungsgemäße Anordnung 23 auf die obigen Ausführungen zum Muldenförderer 10 verwiesen.

Das zweite Transportmittel 25 ist ein Transportförderer 26, der zum längsaxialen Transportieren der Fische ausgebildet und eingerichtet ist, wobei die Transportebene E₂ des Transportförderers 26 unterhalb der Transportebene E₁ des Muldenförderers 10 liegt und die Transportrichtung T_{T} des Transportförderers 26 quer zur Transportrichtung T_{M} des Muldenförderers 10 ausgerichtet ist. In einer optionalen Ausführungsform ist der Transportförderer 26 im Wesentlichen rechtwinklig zum Muldenförderer 10 angeordnet und umfasst V-förmige Träger 27, die an einem endlos umlaufenden Kettenförderer 28 angeordnet sind. An den Kettenförderer 28 mit den V-förmigen Trägern 27 schließen sich zwei endlos umlaufende Spikeketten an. Der Transportförderer 26 kann aber ebenfalls ein Querförderer oder jedes andere Transportelement sein, das zum Abtransport der aus den Mulden 16 des Muldenförderers 10 fallenden Fische ausgebildet und eingerichtet ist.

Im Folgenden wird das erfindungsgemäße Verfahren anhand der Zeichnung näher erläutert:
Das Verfahren dient zum Übergeben von Fischen von einem ersten Transportmittel 24 an ein zweites Transportmittel 25. Zunächst werden die Fische in einer Transportebene E₁ quer zu ihrer Längserstreckung mittels eines Muldenförderers 10 in Transportrichtung T_{M} in einen Übergabebereich Ü zur Übergabe der Fische an das zweite Transportmittel 25 zugeführt. Dabei sind die Fische seitlich in den Mulden 16 aufgenommen, so dass sie mit dem Bauch oder dem Rücken voraus transportiert werden. Erreichen die Fische den Übergabebereich Ü, werden die Fische aus den Mulden 16 im Übergabebereich Ü abgegeben, indem die einer Transportkette 12 zugeordneten Mulden 16 mit der Transportkette 12 um ein Umlenkelement 15 geführt werden, so dass die Fische beim Übergang von einem Transporttrum 13 zum Rückführtrum 14 der Transportkette 12 auf das zweite Transportmittel 25 fallen. Beim Umlenken um das Umlenkelement 15 rutschen die Fische von der oder aus der Mulde 16 auf das in einer Ebene E₂ unterhalb der Ebene E₁ liegende Transportmittel 25. Mit dem zweiten Transportmittel 25 werden die Fische abtransportiert, und zwar wahlweise auch quer zu ihrer Längserstreckung oder in Längserstreckung.

Erfindungsgemäß werden die Mulden 16 des Muldenförderers 10 mindestens im Übergabebereich Ü entlang eines vom Verlauf der Transportkette 12 abweichenden Verlaufs geführt. Da die Mulden 16 an der Transportkette 12 angeordnet sind, folgen sie grundsätzlich der Transportkette 12. Dadurch, dass die Mulden 16 schwenkbar um eine quer zur Transportrichtung T_{M} verlaufende Drehachse D_{M} sind, kann allerdings die Ausrichtung der Mulden 16, also deren Position zur Transportkette 12, insbesondere im Übergabebereich Ü verändert werden. Anders ausgedrückt wird das Kippen der Mulden 16 gegenüber dem Verlauf der Transportkette 12 um das Umlenkelement 15 herum verzögert. Die Fische bleiben länger in der oder auf der Mulde 16 liegen und rutschen erst in einer definierten Position aus der oder von der Mulde 16.

Die Mulden 16 bleiben nämlich im Übergabebereich Ü zunächst in einer Position, die im Wesentlichen der Position entspricht, die die Mulden 16 während des Transports auf dem Transporttrum 13 aufweisen, während die Transportkette 12 bereits der Umlenkung um das Umlenkelement 15 folgt. Während des Transports der Fische entlang des Transporttrums 13 sind die Mulden 16 bzw. deren Auflageflächen 21 im Wesentlichen horizontal ausgerichtet. Dadurch, dass sich die Mulden 16 im Übergabebereich Ü auf einer anderen Bewegungsbahn bewegen als die Transportkette 12, indem die Mulden 16 ihren in Führungsschienen 18 geführten Führungskörpern 17 auf einer Bewegungsbahn B_{F} mit einem variablen Radius r_{F} folgen, während die Transportkette 12 einer Bewegungsbahn B_{T} mit einem konstanten Radius r_{T} folgt, wird diese horizontal ausgerichtete Position der Mulden 16 bzw. deren Auflageflächen 21 im Wesentlichen beibehalten. Anders ausgedrückt wird das Umlenken der Mulden 16 verzögert. Die Mulden 16 drehen sich nicht mehr analog zum Umlenkelement 15 bzw. zur umgelenkten Transportkette 12, sondern unabhängig von der Transportkette 12 in einer eigenen Führungsnut 20 einer Führungsschiene 18. Das erfindungsgemäße Verfahren, das sich besonders geeignet mit einem Muldenförderer 10 nach einem oder mehreren der Ansprüche 1 bis 8 ausführen lässt, führt - bei einer geringeren Abwurfhöhe - zu einem zielgerichteten Abwurf der Fische.

## Patentansprüche

1. Muldenförderer (10), ausgebildet und eingerichtet zum Transportieren von Fischen quer zu ihrer Längserstreckung in Transportrichtung T_{M}, umfassend eine umlaufend antreibbare und aus Kettengliedern (11) gebildete Transportkette (12) mit einem die Transportebene E₁ definierenden Transporttrum (13) und einem Rückführtrum (14), wobei die endlose Transportkette (12) um mindestens zwei um eine Drehachse Du drehbare Umlenkelemente (15) zum Antreiben und Führen der Transportkette (12) geführt ist und an der Transportkette (12) Mulden (16) zur Aufnahme jeweils eines Fisches angeordnet sind, wobei jede Mulde (16) um eine quer zur Transportrichtung T_{M} verlaufende Drehachse D_{M} schwenkbar an der Transportkette (12) angeordnet ist und mindestens einen Führungskörper (17) umfasst, und dass mindestens im Übergangsbereich Ü vom Transporttrum (13) zum Rückführtrum (14) mindestens eine Führungsschiene (18) zur Aufnahme der Führungskörper (17) und Führen derselben angeordnet ist, wobei der Verlauf der oder jeder Führungsschiene (18) im Übergangsbereich Ü um das Umlenkelement (15) herum mindestens teilweise vom Verlauf der Transportkette (12) um das Umlenkelement (15) herum abweicht, wobei die Transportkette (12) im Bereich des im Übergangsbereich Ü vom Transporttrum (13) zum Rückführtrum (14) angeordneten Umlenkelementes (15) auf einer Bewegungsbahn B_{T} mit einem konstanten Radius r_{T} bezogen auf die Drehachse Du geführt ist, während die oder jede Führungsschiene (18) eine Bewegungsbahn B_{F} für die Führungskörper (17) mit einem variablen Radius r_{F} bezogen auf die Drehachse D_{U} beschreibt, **dadurch gekennzeichnet, dass** die Bewegungsbahn B_{F} der Führungskörper (17) die Bewegungsbahn B_{T} der Transportkette (12) mindestens zwei Mal schneidet.

2. Muldenförderer (10) nach Anspruch 1, **dadurch gekennzeichnet, dass** jeder Führungskörper (17) ein zylindrisches Gleitstück (19) umfasst, dessen Mittelachse M parallel zur Drehachse D_{M} der Mulde (16) ausgerichtet ist.

3. Muldenförderer (10) nach Anspruch 1 oder 2, **dadurch gekennzeichnet, dass** eine Führungsnut (20) jeder Führungsschiene (18) etwa U-förmig ausgebildet ist, wobei jede Führungsnut (20) radial gerichtet bezogen auf die Drehachse Du nach unten und nach oben begrenzt ist.

4. Muldenförderer (10) nach einem oder mehreren der Ansprüche 1 bis 3, **dadurch gekennzeichnet, dass** jeder Führungskörper (17) in Transportrichtung T_{M} nachlaufend gegenüber der Drehachse D_{M} der zugehörigen Mulde (16) angeordnet ist.

5. Muldenförderer (10) nach einem oder mehreren der Ansprüche 1 bis 4, **dadurch gekennzeichnet, dass** die Mulden (16) auf der in Transportrichtung T_{M} vorauslaufenden Seite derart offen ausgebildet sind, dass die in den Mulden (16) liegenden Fische im Übergangsbereich Ü vom Transporttrum (13) in den Rückführtrum (14) aus den Mulden (16) fallen.

6. Muldenförderer (10) nach einem oder mehreren der Ansprüche 1 bis 5, **dadurch gekennzeichnet, dass** die Mulden (16) einen im Querschnitt etwa L-förmigen Muldenkörper aufweisen, der eine mindestens im Bereich des Transporttrums (13) im Wesentlichen parallel zur Transportebene E₁ ausgerichtete Auflagefläche (21) und eine senkrecht zur Auflagefläche (21) ausgerichtete Anlagefläche (22) aufweist, wobei die Anlagefläche (22) der Mulden (16) an der in Transportrichtung T_{M} nachlaufenden Seite der Auflagefläche (21) angeordnet ist.

7. Anordnung (23), umfassend ein erstes Transportmittel (24) zum Zuführen von Fischen in einen Übergabebereich Ü zur Übergabe der Fische an ein zweites Transportmittel (25), das zweite Transportmittel (25) zum Abführen der vom ersten Transportmittel (24) übernommenen Fische, wobei das erste Transportmittel (24) ein Muldenförderer (10) ist, der zum Transportieren der Fische quer zu ihrer Längserstreckung in Transportrichtung T_{M} ausgebildet und eingerichtet ist, **dadurch gekennzeichnet, dass** der Muldenförderer (10) nach einem oder mehreren der Ansprüche 1 bis 6 ausgebildet und eingerichtet ist.

8. Anordnung (23) nach Anspruch 7, **dadurch gekennzeichnet, dass** das zweite Transportmittel (25) ein Transportförderer (26) ist, der zum längsaxialen Transportieren der Fische ausgebildet und eingerichtet ist, wobei die Transportebene E₂ des Transportförderers (26) unterhalb der Transportebene E₁ des Muldenförderers (10) liegt und die Transportrichtung T_{T} des Transportförderers (26) quer zur Transportrichtung T_{M} des Muldenförderers (10) ausgerichtet ist.

9. Verfahren zum Übergeben von Fischen von einem ersten Transportmittel (24) an ein zweites Transportmittel (25), umfassend die Schritte:
- Zuführen der Fische quer zu ihrer Längserstreckung mittels eines Muldenförderers (10) in Transportrichtung T_{M} in einen Übergabebereich Ü zur Übergabe der Fische an das zweite Transportmittel (25),
- Abgeben der Fische aus den Mulden (16) im Übergabebereich Ü, indem die einer Transportkette (12) zugeordneten Mulden (16) mit der Transportkette (12) um ein Umlenkelement (15) geführt werden, so dass die Fische beim Übergang von einem Transporttrum (13) zum Rückführtrum (14) der Transportkette (12) auf das zweite Transportmittel (25) fallen, und
- Abtransportieren der Fische mittels des zweiten Transportmittels (25), wobei die Mulden (16) des Muldenförderers (10) mindestens im Übergabebereich Ü entlang eines vom Verlauf der Transportkette (12) abweichenden Verlaufs geführt werden,
**dadurch gekennzeichnet, dass** das Verfahren mit einem Muldenförderer (10) entsprechend einem der Ansprüche 1-6 ausgeführt wird.

10. Verfahren nach Anspruch 9, **dadurch gekennzeichnet, dass** die Mulden (16) im Übergabebereich Ü zunächst in einer Position bleiben, die im Wesentlichen der Position entspricht, die die Mulden (16) während des Transports auf dem Transporttrum (13) aufweisen, während die Transportkette (12) bereits der Umlenkung um das Umlenkelement (15) folgt.

11. Verfahren nach Anspruch 9 oder 10, **dadurch gekennzeichnet, dass** sich die Mulden (16) im Übergabebereich Ü auf einer anderen Bewegungsbahn bewegen als die Transportkette (12), indem die Mulden (16) ihren in Führungsschienen (18) geführten Führungskörpern (17) auf einer Bewegungsbahn B_{F} mit einem variablen Radius r_{F} folgen, während die Transportkette (12) einer Bewegungsbahn B_{T} mit einem konstanten Radius r_{T} folgt.

## Claims

1. Trough conveyor (10), which is designed and configured for transporting fish transversely to the longitudinal extent thereof in the transport direction T_{M}, comprising a transport chain (12) which can be rotationally driven and is formed from chain links (11) and has a transport run (13), which defines the transport plane E₁, and a return run (14), wherein the continuous transport chain (12) is guided about at least two deflection elements (15), which can be rotated about an axis of rotation Dᵤ, for driving and guiding the transport chain (12), and the transport chain (12) has arranged thereon troughs (16) each intended to receive one fish, wherein each trough (16) is arranged on the transport chain (12) so as to be pivotable about an axis of rotation D_{M} extending transversely to the transport direction T_{M} and comprises at least one guide body (17), and in that at least one guide rail (18) for receiving the guide body (17) and for guiding the same is arranged at least in the transition region U from the transport run (13) to the return run (14), wherein the course of the or of each guide rail (18) in the transition region U around the deflection element (15) at least partially differs from the course of the transport chain (12) around the deflection element (15), wherein the transport chain (12) is guided in the region of the deflection element (15), arranged in the transition region U from the transport run (13) to the return run (14), on a path of movement B_{T} with a constant radius r_{T} relating to the axis of rotation Du while the or each guide rail (18) describes a path of movement B_{F} for the guide body (17) with a variable radius r_{F} relating to the axis of rotation D_{U}, **characterized in that** the path of movement B_{F} of the guide body (17) intersects the path of movement B_{T} of the transport chain (12) at least twice.

2. Trough conveyor (10) according to claim 1, **characterized in that** each guide body (17) comprises a cylindrical sliding member (19) whose central axis M is oriented parallel to the axis of rotation D_{M} of the trough (16).

3. Trough conveyor (10) according to claim 1 or 2, **characterized in that** a guiding groove (20) of each guide rail (18) is approximately U-shaped, wherein each guiding groove (20) oriented radially relative to the axis of rotation Du is limited downwards and upwards.

4. Trough conveyor (10) according to one or more of claims 1 to 3, **characterized in that** each guide body (17) is arranged in transport direction T_{M} trailing in relation to the axis of rotation D_{M} of the associated trough (16).

5. Trough conveyor (10) according to one or more of claims 1 to 4, **characterized in that** the troughs (16) on the preceding side in transport direction T_{M} are designed to be open in such a manner that the fish lying in the troughs (16) drop out of said troughs (16) in the transition region U from the transport run (13) to the return run (14).

6. Trough conveyor (10) according to one or more of claims 1 to 5, **characterized in that** the troughs (16) have a trough body, which is approximately L-shaped in cross-section, said trough body, at least in the region of the transport run (13), having a support surface (21) oriented substantially parallel to the transport plane E₁ and a contact surface (22) oriented perpendicular to the support surface (21), wherein the contact surface (22) of the troughs (16) is arranged on the trailing side in transport direction T_{M} of the support surface (21).

7. Arrangement (23), comprising a first transport means (24) for feeding fish into a transfer region U for transferring the fish to a second transport means (25), the second transport means (25) for discharging the fish taken over from the first transport means (24), the first transport means (24) being a trough conveyor (10) which is designed and configured to transport the fish transversely to the longitudinal extent thereof in transport direction T_{M}, **characterized in that** the trough conveyor (10) is designed and configured according to one or more of claims 1 to 6.

8. Arrangement (23) according to claim 7, **characterized in that** the second transport means (25) is a transport conveyor (26) which is designed and configured for transporting the fish along a longitudinal axis, wherein the transport plane E₂ of the transport conveyor (26) is situated below the transport plane E₁ of the trough conveyor (10) and the transport direction T_{T} of the transport conveyor (26) is oriented transversely to the transport direction T_{M} of the trough conveyor (10).

9. Method for transferring fish from a first transport means (24) to a second transport means (25), comprising the steps:
- Feeding the fish transversely to the longitudinal extent thereof by means of a trough conveyor (10) in transport direction T_{M} into a transfer region U for transferring the fish to the second transport means (25),
- Discharging the fish from the troughs (16) in the transfer region U by guiding the troughs (16) assigned to a transport chain (12) about a deflection element (15) with the transport chain (12) such that the fish drop onto the second transport means (25) during the transition from a transport run (13) to the return run (14) of said transport chain (12), and
- Transporting the fish away by means of the second transport means (25), wherein the troughs (16) of the trough conveyor (10) are guided at least in the transfer region U along a course differing from the course of the transport chain (12), **characterized in that** the method is carried out with a trough conveyor (10) according to any one of claims 1 to 6.

10. Method according to claim 9, **characterized in that** the troughs (16) in the transfer region Ü initially remain in a position substantially corresponding to the position which the troughs (16) have during transport on the transport run (13), while the transport chain (12) already follows the deflection around the deflection element (15).

11. Method according to claim 9 or 10, **characterized in that** the troughs (16) in the transfer region Ü move on a different path of movement than the transport chain (12), **in that** the troughs (16) follow their guide bodies (17) guided in guide rails (18) on a path of movement B_{F} with a variable radius r_{F}, while the transport chain (12) follows a path of movement B_{T} with a constant radius r_{T}.

## Revendications

1. Convoyeur à bande à auges (10), réalisé et mis au point pour transporter des poissons de manière transversale par rapport à leur extension longitudinale dans le sens de transport T_{M}, comprenant une chaîne de transport (12) entraînable en continu et constituée de membres de chaîne (11), dotée d'une courroie de transport (13) définissant le niveau de transport E₁ et d'une courroie de renvoi (14), la chaîne de transport (12) sans fin étant guidée autour d'au moins deux éléments de déviation (15) pouvant tourner autour d'un axe de rotation D_{U} pour entraîner et guider la chaîne de transport (12) et des auges (16) destinées à recevoir respectivement un poisson étant agencées sur la chaîne de transport (12), chaque auge (16) étant agencée sur la chaîne de transport (12) de manière pivotante autour d'un axe de rotation D_{M} passant à la transversale du sens de transport T_{M}, et comprenant au moins un corps de guidage (17), et qu'au moins au niveau de la zone de transition Ü de la courroie de transport (13) vers la courroie de renvoi (14), au moins un rail de guidage (18) est agencé pour recevoir les corps de guidage (17) et guider ceux-ci, le trajet du ou de chaque rail de guidage (18) déviant, au niveau de la zone de transition Ü autour de l'élément de déviation (15), au moins partiellement du trajet de la chaîne de transport (12) autour de l'élément de déviation (15), la chaîne de transport (12) étant guidée, dans la zone de l'élément de déviation (15) agencé dans la zone de transition Ü de la courroie de transport (13) à la courroie de renvoi (14), sur une voie de déplacement B_{T} d'un rayon r_{T} constant par rapport à l'axe de rotation Du, tandis que le ou chaque rail de guidage (18) décrit une voie de déplacement B_{F} pour les corps de guidage (17) de rayon r_{F} variable par rapport à l'axe de rotation Du, **caractérisé en ce que** la voie de déplacement B_{F} des corps de guidage (17) coupe au moins deux fois la voie de déplacement B_{T} de la chaîne de transport (12).

2. Convoyeur à bande à auges (10) selon la revendication 1, **caractérisé en ce que** chaque corps de guidage (17) comprend une pièce de glissement (19) cylindrique dont l'axe médian M est orienté à la parallèle de l'axe de rotation D_{M} de l'auge (16).

3. Convoyeur à bande à auges (10) selon la revendication 1 ou 2, **caractérisé en ce qu'**une rainure de guidage (20) de chaque rail de guidage (18) est réalisée approximativement en forme de U, chaque rainure de guidage (20) étant limitée, en orientation radiale par rapport à l'axe de rotation Du, vers le bas et vers le haut.

4. Convoyeur à bande à auges (10) selon l'une quelconque ou plusieurs des revendications 1 à 3, **caractérisé en ce que** chaque corps de guidage (17) est agencé, dans le sens de transport T_{M}, en aval par rapport à l'axe de rotation D_{M} de l'auge (16) concernée.

5. Convoyeur à bande à auges (10) selon l'une quelconque ou plusieurs des revendications 1 à 4, **caractérisé en ce que** les auges (16) sont réalisées ouvertes sur la face en amont, dans le sens de transport T_{M}, de sorte que les poissons reposant dans les auges (16) tombent des auges (16), dans la zone de transfert Ü, pour passer de la courroie de transport (13) à la courroie de renvoi (14).

6. Convoyeur à bande à auges (10) selon l'une quelconque ou plusieurs des revendications 1 à 5, **caractérisé en ce que** les auges (16) présentent un corps d'auge approximativement en forme de L dans leur section droite, lequel corps d'auge présente une surface d'appui (21) orientée, au moins dans la zone de la courroie de transport (13), sensiblement parallèle au niveau de transport E₁, et une surface de contact (22) orientée à la perpendiculaire de la surface d'appui (21), ladite surface de contact (22) des auges (16) étant agencée sur la face en amont, dans le sens de transport T_{M}, de la surface d'appui (21).

7. Agencement (23), comprenant un premier moyen de transport (24) destiné à amener des poissons dans une zone de transfert Ü pour transférer les poissons à un deuxième moyen de transport (25), ledit deuxième moyen de transport (25) destiné à l'évacuation des poissons repris par le premier moyen de transport (24), ledit premier moyen de transport (24) étant un convoyeur à bande à auges (10) qui est réalisé et mis au point pour le transport des poissons de manière transversale par rapport à leur extension longitudinale dans le sens de transport T_{M}, **caractérisé en ce que** ledit convoyeur à bande à auges (10) est réalisé et mis au point selon une quelconque ou plusieurs des revendications 1 à 6.

8. Agencement (23) selon la revendication 7, **caractérisé en ce que** le deuxième moyen de transport (25) est un convoyeur à bande (26) qui est réalisé et mis au point pour le transport des poissons dans l'axe longitudinal, le niveau de transport E₂ du convoyeur à bande (26) étant situé en dessous du niveau de transport E₁ du convoyeur à bande à auges (10) et le sens de transport T_{T} du convoyeur à bande (26) étant orienté à la transversale du sens de transport T_{M} du convoyeur à bande à auges (10).

9. Procédé de transfert de poissons d'un premier moyen de transport (24) à un deuxième moyen de transport (25), comprenant les étapes suivantes :
- amenée des poissons de manière transversale par rapport à leur extension longitudinale au moyen d'un convoyeur à bande à auges (10) dans le sens de transport T_{M} dans une zone de transfert Ü pour transférer les poissons au deuxième moyen de transport (25),
- remise des poissons, à partir des auges (16), dans la zone de transfert Ü, en ce que les auges (16) associées à une chaîne de transport (12) sont guidées avec la chaîne de transport (12) autour d'un élément de déviation (15), de sorte que les poissons tombent, au passage d'une courroie de transport (13) à la courroie de renvoi (14) de la chaîne de transport (12), sur le deuxième moyen de transport (25), et
- évacuation des poissons au moyen du deuxième moyen de transport (25), les auges (16) du convoyeur à bande à auges (10) étant guidées au moins dans la zone de transfert Ü, le long d'un trajet déviant du trajet de la chaîne de transport (12),
**caractérisé en ce que** le procédé est réalisé doté d'un convoyeur à bande à auges (10) selon l'une quelconque des revendications 1 à 6.

10. Procédé selon la revendication 9, **caractérisé en ce que** les auges (16) dans la zone de transfert Ü restent, tout d'abord, dans une position qui correspond sensiblement à la position que présentent les auges (16) pendant le transport sur la courroie de transport (13), tandis que la chaîne de transport (12) suit déjà la déviation autour de l'élément de déviation (15).

11. Procédé selon la revendication 9 ou 10, **caractérisé en ce que** les auges (16) se déplacent, dans la zone de transfert Ü, sur une autre voie de déplacement que la chaîne de transport (12), **en ce que** les auges (16) suivent leur corps de guidage (17) guidé par des rails de guidage (18) sur une voie de guidage B_{F} d'un rayon r_{F} variable, tandis que la chaîne de transport (12) suit une voie de déplacement B_{T} d'un rayon r_{T} constant.
